# EUROPÄISCHE PATENTSCHRIFT

(11) **EP 3 433 558 B1**
(45) Veröffentlichungstag und Bekanntmachung des Hinweises auf die Patenterteilung: **06.05.2020**
(21) Anmeldenummer: 17713002.8
(22) Anmeldetag: 23.03.2017
(51) Int. Cl.: F27B 7/20, C04B 7/43, F27D 17/00

(54) **ANLAGE ZUR HERSTELLUNG VON ZEMENTKLINKER MIT VEREINZELTEM MITSTROM- DURCHFLUSSCALCINATOR**
SYSTEM FOR PRODUCING CEMENT CLINKER WITH A SEPARATED ENTRAINED-FLOW CALCINATOR
INSTALLATION DE PRODUCTION DE CLINKER ÉQUIPÉ D'UN CALCINATEUR CONTINU À CO-COURANT SÉPARÉ

(30) Priorität: 26.03.2016 DE 102016003751
(43) Veröffentlichungstag der Anmeldung: 30.01.2019
(73) Patentinhaber: KHD Humboldt Wedag GmbH, 51067 Köln (DE)
(72) Erfinder: SCHÜRMANN, Heiko, 51373 Leverkusen (DE); NASSENSTEIN, Florian, 51766 Engelskirchen (DE)
(86) Internationale Anmeldenummer: PCT/EP2017/056934
(87) Internationale Veröffentlichungsnummer: WO 2017/167639

(56) Entgegenhaltungen:
- WO-A1-03/074956
- WO-A1-2015/197372

## Beschreibung

Die Erfindung betrifft eine Anlage zur Herstellung von Zementklinker, aufweisend mindestens einen Drehrohrofen zum Sintern des Zementklinkers aus vorcalciniertem Rohmehl, mindestens ein, dem Drehrohrofen in Gasflussrichtung nachgeschalteten Wärmetauscher zur Rekuperation von Prozesswärme aus dem mindestens einen Drehrohrofen, mindestens einem Mitstrom-Durchflusscalcinator zum Vorcalcinieren (Entsäuern) von Rohmehl, mindestens einem, dem Drehrohrofen in Materialflussrichtung nachgeschalteten Klinkerkühler zum Kühlen des gesinterten Zementklinkers, wobei eine Leitung zum Führen von Kühlerabluft zur Rekuperation von Wärme in die Anlage vorgesehen ist.

Zur Herstellung von Zementklinker aus Rohmehl, nämlich einer Mischung aus kalkhaltigem Material und silikathaltigem Gestein, ist es bekannt, das Rohmehl zunächst einer Calcinierungsstufe zuzuführen, wo das Rohmehl zunächst entsäuert wird. Die sogenannte "Entsäuerung" ist die Umwandlung des carbonathaltigen Materials in Form von kohlensaurem Kalk (CaCO₃) in den gebrannten Kalk (CaO), der im Wesentlichen aus Calciumoxid (CaO) besteht, durch Behandlung in der Wärme. Bei dieser Entsäuerung wird Kalziumcarbonat (CaCO₃) in Calciumoxid (CaO) unter Freisetzung von Kohlendioxid (CO₂) überführt.

Die Trennung der Entsäuerung von der der heute der Entsäuerung nachgeschalteten Sinterstufe in einem Drehrohrofen erlaubt es, im sogenannten Trockenverfahren einen kürzeren Drehrohrofen für den Prozess vorzusehen und die Abwärme des Drehrohrofens zur endothermen Entsäuerung zu nutzen. Diese Art der Herstellung von Zementklinker hat sich in der Vergangenheit bewährt. Neuere Forderungen zur Reinhaltung der Luft erfordern eine weitere Umgestaltung des Herstellungsprozesses bei der weniger schädliche nitrose Gase (NOₓ) in der Abluft der Anlage zur Herstellung von Zementklinkerentstehen, weniger Kohlendioxid (CO₂) in die frei Atmosphäre eingeleitet wird und auch noch Wärme zur Herstellung von elektrischer Energie entnommen werden kann, unter anderem, um Verdichter zur Einlagerung von Kohlendioxid (CO₂) unter Tage zu betreiben oder um Kohlendioxid (CO₂) zu verflüssigen.

Bei bekannten Anlagen zur Herstellung von Zementklinker ist es bekannt, wie im WO03074956A1 oder WO2015197372A1 offenbart, Abwärme aus dem Herstellungsprozess an ganz bestimmten Stellen einer solchen Anlage zu entnehmen, wie beispielsweise zwischen dem dritten und fünften Zyklonwärmetauscher einer solchen Anlage, und die Abwärme und Abluft der Energieerzeugung an anderen vorbestimmten Stellen in diese Anlage zurückzuführen.

Der Vorteil der Wärmeentnahme aus einer beliebigen Anlage zur Herstellung von Zementklinker gegenüber einer von dieser Anlage getrennten Energieerzeugung ist die Nutzung der in der Anlage zur Herstellung von Zementklinker schon vorliegenden, sehr energieumsatzstarken Feuerung zur Wärmeerzeugung aus minderwertigen, sekundären Brennstoffen. Der Menge an auskoppelbarer Wärmeenergie aus dem Herstellungsprozess für Zementklinker ist jedoch eine für die gewählte Verfahrensführung natürliche Grenze gesetzt. Die aus dem Herstellungsprozess zu entnehmende Energie muss mit dem Trägergas der Anlage oder dem zu behandelnden Rohmetrial als Energielast mitgeführt werden. Durch die hohe Energielast entstehen neue Probleme mit der Kontrolle von nitrosen Gasen (NOₓ) und der Qualität des hergestellten Zementklinkers. Die herkömmliche Prozessführung erlaubt eine nur typische maximale Energielast als Gepäck des herzustellenden Zementklinkers.

Aufgabe der Erfindung ist es daher, eine Anlage zur Herstellung von Zementklinker zur Verfügung zu stellen, welche eine höhere Energiebilanz zu Gunsten von Abwärme für die Erzeugung von elektrischer Energie zur Verfügung stellt als es bisherige Anlagen zur Herstellung von Zementklinker zur Verfügung stellen können, wobei die Qualität des hergestellten Zementklinkers und die Abluftqualität nicht verringert werden soll.

Die der Erfindung zu Grunde liegende Aufgabe wird dadurch gelöst, dass der Mitstrom-Durchflusscalcinator in Materialflussrichtung vor dem Wärmetauscher angeordnet ist. Weitere vorteilhafte Ausgestaltungen der Anlage zu Herstellung von Zementklinker sind in den Unteransprüchen zu Anspruch 1 angegeben.

Nach der Erfindung ist also vorgesehen, die Abfolge der Vorcalcinierung und der Vorwärmung gegenüber einer bekannten Anlage zur Herstellung von Zementklinker im Trockenverfahren faktisch umzudrehen. Diese neue Verfahrensführung würde ohne Entnahme von Wärme zur Herstellung von elektrischer Energie nicht nur sehr kostspielig sein, sondern auch noch die gesamte Wärmebilanz zwischen den einzelnen Anlagenteilen bis zur Unbrauchbarkeit der Anlage verändern. Die Idee der Erfindung basiert auf der Tatsache, dass mit den Mitteln einer herkömmlichen Anlage zur Herstellung von Zementklinker so viel für den Herstellungsprozess überflüssige Wärme erzeugt wird, dass die Energiebilanz wesentlich stärker auf der Seite der elektrischen Energieerzeugung liegt als dies bei herkömmlichen Anlagen mit Auskopplung von Wärmeenergie heute schon der Fall ist. Nach dem Gedanken der Erfindung ist vorgesehen, dass eine in herkömmlichen Anlagen zur Herstellung von Zementklinker häufig vorhandene, sogenannte Tertiärluftleitung vom Klinkerkühler in den mittleren bis oberen Bereich des Calcinators zu Gunsten einer Ableitung der gesamten Kühlerabluft in den Fuß eines Mitstrom-Durchflusscalcinators weicht. Es ist also vorgesehen, die Vorcalcination mit der gesamten Abwärme des Klinkerkühlers durch die Vereinigung verschiedener Abluftfraktionen des Klinkerkühlers vorzunehmen. Man war bis heute im Allgemeinen bestrebt, die Temperatur der Abluft eines Klinkerkühlers mit möglichst hoher Temperatur in den Prozess zurückzuführen, um so eine hohe Rekuperationseffizienz zu erreichen. Dies geschieht durch eine Trennung (Fraktionierung) der Kühlerabluft aus einer dem Abwurfschacht des Drehrohrofens räumlich nahen Entnahme als Tertiärluft und Trennung dieser hochkalorischen Abluft von einer niederkalorischen Abluft, die räumlich entfernt vom Drehrohrofenabwurfschacht entnommen wurde. Die räumlich entfernt vom Drehrohrofenabwurfschacht entnommene Kühlerabluft ist in der Regel nur noch mit geringer Effizienz nutzbar, weil die Temperatur dieser Abluft kaum mehr als 300°C erreicht, gleichwohl die in dieser Abluft enthaltene Energiemenge recht groß ist.

Nach dem Gedanken der Erfindung wird heute die gesamte Kühlerabluft vereint, wodurch die mittlere Temperatur der Kühlerabluft geringer ist als die der bisher bekannten Tertiärluft. Diese vereinte Kühlerabluft wird sodann als Trägerluft und Wärmequelle für die Vorcalcination von Rohmehl in einem Calcinator verwendet. Dabei wird das Rohmehl kalt in den Calcinator aufgegeben. Die sodann den Calcinator verlassende Abluft wird zu Gunsten einer elektrischen Energieerzeugung gekühlt. Das sich dabei mitabkühlende Rohmehl wird sodann in einem kleineren Wärmetauscher als es bis heute der üblicherweise der Fall ist, erneut aufgewärmt und vorcalciniert in den Drehrohrofen gegeben.

Durch den Betrieb der Anlage mit einem Wärmemengenüberschuss ist es möglich, an verschiedenen Stellen der Anlage Wärmeenergie durch einen Wärmetauscher zu entnehmen und dies ohne den Materialstrom oder den Gasstrom über Umleitungen in der Anlage zu führen. In vorteilhafter Weise ist mindestens ein Wärmetauscher zur Entnahme von Prozesswärme für die Erzeugung von elektrischer Energie vorgesehen, der ausgewählt ist aus der Gruppe von: a) ein Wärmetauscher zur Entnahme von Prozesswärme für die Erzeugung von elektrischer Energie am Ausgang des Wärmetauschers zur Rekuperation von Prozesswärme aus dem mindestens einen Drehrohrofen, b) ein Wärmetauscher zur Entnahme von Prozesswärme für die Erzeugung von elektrischer Energie im Mitstrom-Durchflusscalcinator, c) ein Wärmetauscher als Feststoffkühler zur Entnahme von Prozesswärme für die Erzeugung von elektrischer Energie am materialstromseitigen mittelbaren oder unmittelbaren Ausgang des Mitstrom-Durchflusscalcinators, und d) ein Wärmetauscher zur Entnahme von Prozesswärme für die Erzeugung von elektrischer Energie am gasstromseitigen Ausgang eines Entstaubers, der hinter einer Ausbrandstrecke einer dem Mitstrom-Durchflusscalcinator nachgeschalten Wirbelkammer angeordnet ist. Die Prozessführung mit einem Wärmemengenüberschuss erlaubt es, den Herstellungsprozess an verschiedenen Stellen mit einem Wärmeexzess durchzuführen, wobei die Temperatur durch Entnahme an diesen Stellen stets wieder gesenkt wird, so dass sich keine Bedingungen ausbilden, unter denen eine übermäßige Bildung von nitrosen Gasen (NOₓ) stattfindet oder eine unkontrollierte Menge an Kohlenmonoxid (CO) entsteht.

Auch wenn die hier vorgestellten Anlage anders als bisher bekannte Anlagen zur Herstellung von Zementklinker betrieben werden, so ist es von Vorteil, wenn eine Wirbelkammer mit Ausbrandstrecke in Form eines Rohres wie ein Schwanenhalsreaktor mit der Wirbelkammer als Umlenkpunkt des Schwanenhalsreaktors dem Calcinator in Materialflussrichtung und in Gasflussrichtung nachgeschaltet ist. In dieser Ausbrandstrecke wird der bei der Feuerung des Calcinators unter oxidativen Bedingungen eventuell noch übrig gebliebener entstehende Anteil an Kohlenmonoxid (CO) verbrannt. Die Temperatur im Calcinator ist durch die Feuerung und durch die Kühlung durch das kalt aufgegebene Rohmehl gerade im Bereich von etwa 950°C bis 1.050°C, dem Fenster, in dem die Entsäuerung stattfindet. In diesem Temperaturfenster bildet sich kein sog. thermischer Stickstoff, nämlich ein Gemisch unterschiedlicher nitroser Gase (NOₓ), die aus der Verbrennung der atmosphärischen Luft bei noch höheren Temperaturen entstehen. Anders als in herkömmlichen Anlagen zur Herstellung von Zementklinker wird der Calcinator mit atmosphärischer Trägerluft aus dem Klinkerkühler beschickt. Bei herkömmlichen Anlagen zur Herstellung von Zementklinker besteht die Trägerluft aus dem Drehrohrofenabgas, das sauerstoffarm (wenig O₂) und reich an nitrosen Gasen (NOₓ) ist. Durch diese Gaszusammensetzung wird der Calcinator einer solchen herkömmlichen Anlage in reduktiver Weise betrieben. Um zu vermeiden, dass im Calcinator, eine vollständige Entsäuerung stattfindet und damit kein Abbruch der durch die endotherme Entäuerung thermostatisierende Wirkung des Rohmehls eintritt, wird dem Calcinator Wärme durch einen Wärmetauscher entnommen. Diese Wärme kann zur Dampferzeugung genutzt werden, wobei der Dampf als Turbinengas zur Erzeugung von elektrischer Energie verwendet wird. An den in oxidativer Weise betriebenen Calcinator in der hier vorgestellten Anlage ist eine Wirbelkammer mit Ausbrandstrecke in Form eines Rohres angeschlossen. Die Wirbelkammer und die Ausbrandstrecke sind wie ein Schwanenhalsreaktor aufgebaut mit der Wirbelkammer als Umlenkpunkt des Schwanenhalsreaktors. Dieser Reaktor ist dem Calcinator in Materialflussrichtung und auch in Gasflussrichtung nachgeschaltet, in welcher Brennstoffrückstände aus der Feuerung des Clacinators ausbrennen können. Das aus der Ausbrandstrecke austretende vorcalcinierte Rohmehl wird sodann durch einen Zyklon abgeschieden. Die heißen Abgase des Calcinators werden durch einen Wärmetauscher abgekühlt, so dass ein dem Wärmetauscher folgender Ventilator die Abgase fördern kann. Das abgeschiedene Rohmehl wird über einen Feststoffkühler ebenfalls abgekühlt. Sowohl die Abwärme aus dem Rohmehl als auch die Abwärme aus den Abgasen werden ebenfalls zur Dampferzeugung eingesetzt, wobei der Dampf als Turbinengas zur Erzeugung elektrischer Energie verwendet wird.An dieser Stelle trennen sich zwei mögliche Ausführungsformen der erfindungsgemäßen Anlage.

In einer ersten Variante befindet sich der vereinzelte Calcinator neben dem Drehrohrofen und dem kurzen Wärmetauscher. In dieser ersten Variante ist vorgesehen, dass ein mechanisches Hebewerk zwischen einem gasstromseitigen Ausgang eines Entstaubers und einem Wärmetauscher zur Rekuperation von Prozesswärme aus dem mindestens einen Drehrohrofen angeordnet ist. Dieses Hebewerk hebt das hinter einer Ausbrandstrecke einer dem Mitstrom-Durchflusscalcinator nachgeschalten Wirbelkammer austretende, vorcalcinierte Rohmehls in den zuvor genannten Wärmetauscher.

In einer zweiten Variante befindet sich der vereinzelte Calcinator in der Höhe. Das Rohmehl, das aus der Calcinationsstufe strömt, wird in den Wärmetauscher zur Rekuperation von Prozesswärme aus dem mindestens einen Drehrohrofen über eine Schwerkraftförderung eingebracht. In dieser zweiten Variante ist also vorgesehen, dass der gasstromseitige Ausgang eines Entstaubers, der hinter einer Ausbrandstrecke einer dem Mitstrom-Durchflusscalcinator nachgeschalten Wirbelkammer angeordnet ist, höher angeordnet ist, als der Eingang des vorcalcinierten Rohmehls in den Wärmetauscher zur Rekuperation von Prozesswärme aus dem mindestens einen Drehrohrofen, so dass Mittel zum Heben des vorcalcinierten Rohmehls entfallen können, wie beispielsweise ein Hebewerk.

Die Erfindung wird anhand der folgenden Figuren näher erläutert. Es zeigt:
- Fig. 1: eine erste Variante der erfindungsgemäßen Anlage zur Herstellung von Zementklinker,
- Fig. 2: eine zweite Variante der erfindungsgemäßen Anlage zur Herstellung von Zementklinker.

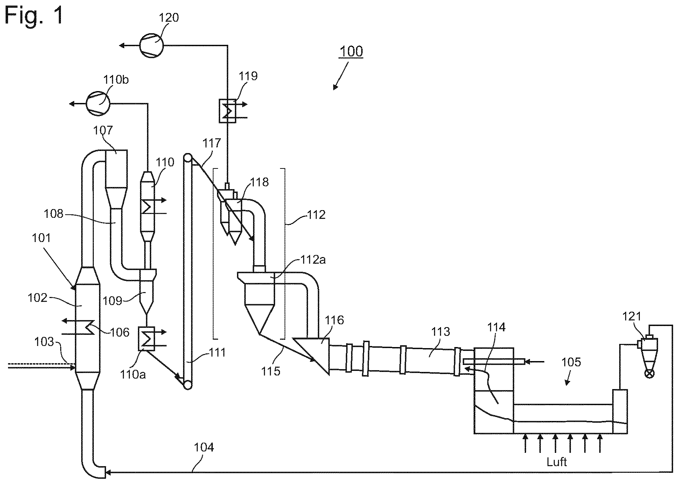

In **Figur 1** ist eine erste Variante einer Anlage 100 zur Herstellung von Zementklinker skizziert. Die Wege des Rohmehls 101 und die Wege des Trägergases und Abgases in dieser Anlage 100 unterscheiden sich von den typischen Wegen von Rohmehl 101, Trägergas und Abgas einer herkömmlichen Anlage zur Herstellung von Zementklinker. Beginnend bei der Rohmehlaufgabe 101a in den Calcinator 102 wird das Rohmehl 101 in eine Wirbelschicht im Calcinator 102 im kalten Zustand eingebracht. Im Calcinator 102 ist eine Feuerung 103 vorgesehen, welche Kühlerabluft 104 aus einem in Materialstromrichtung am Ende der Anlage 100 gelegenen Zementklinkerkühler 105 weiter aufheizt. In diesem oxidativen Gemisch aus erhitzter atmosphärischer Zementklinkerkühlerabuft und Feuerungsabgasen wird das Rohmehl 101 zu einem hohen Anteil, jedoch nicht vollständig entsäuert. Die vollständige Entsäuerung wird bewusst durch einen ersten Wärmetauscher 106 unterbrochen. Würde die Entsäuerung des Rohmehls 101 vollständig stattfinden, so würde die thermostatisierende Wirkung der endothermen Entsäuerungsreaktion im Calcinator 102 entfallen, wodurch sich hohe Temperaturspitzen in einigen Bereichen im Calcinator 102 ausbilden können, innerhalb derer sich je nach Verfahrensführung nitrose Gase (NOₓ) durch Verbrennung der Luft bilden könnten. Die Ausbildung nitroser Gase (NOₓ) soll bewusst unterdrückt werden. Mit den Feuerungsabgasen der Feuerung 103 und den in den Calcinator 102 eintretenden Kühlerabgase 104 wird das in dem Calcinator 102 teilentsäuerte Rohmehl 101 in eine Wirbelkammer 107 mit daran anschließender Ausbrandstrecke 108 geführt. In der Wirbelkammer und in der Ausbrandstrecke wird im Calcinator 102 gebildetes Kohlenmonoxid (CO) und Brennstoffreste vollständig ausgebrannt, wobei in der Wirbelkammer suspendiertes Rohmehl 101 katalytisch die Oxidation von Kohlenmonoxid (CO) unterstützt. Am Ende der Ausbrandstrecke 108 trennen sich die Wege der Abgase des Calcinators 102 und des teilentsäuerten Rohmehls 101. Die Feuerungsabgase werden in einem Entstauber 109 vom teilentsäuerten Rohmehl 101 abgetrennt und über einen Wärmetauscher 110 abgekühlt. Die aus den Feuerungsabgasen entnommene Wärme wird zur Erzeugung von Wasserdampf als Turbinengas genutzt, wobei der Weg des Wasserdampfes hier nicht gezeigt ist. Die abgekühlten, kohlenmonoxidarmen Feuerungsabgase werden sodann über einen Ventilator 110b entweder in die freie Atmosphäre geleitet oder aber einer weiteren Behandlung zur Abtrennung und Einlagerung von Kohlendioxid (CO₂) zugeführt. Das aus dem Entstauber 109 austretende, teilentsäuerte Rohmehl 101 wird sodann in einen Feststoffkühler 110a gegeben, wobei die dort entnommene Wärme ebenfalls zur Erzeugung von Wasserdampf als Turbinengas genutzt wird. Das abgekühlte Rohmehl 101 wird in dieser ersten Variante der Anlage zur Herstellung von Zementklinker 100 auf einen Heber, hier in Form eines Becherwerkes 111 aufgegeben, um erneut an Höhe zu gewinnen, die für eine Aufgabe in den verkürzten Wärmetauscher 112 notwendig ist. Im Wärmetauscher 112 wird die Abwärme des Drehrohrofens 113, aus dem gegenüber einer herkömmlichen Anlage zur Herstellung von Zementklinker nur noch die Feuerungsabgase des Drehrohrofens 113 mit verringerter Menge an Sekundärluft 114 entweichen, auf das erkaltete und teilentsäuerte Rohmehl 101 übertragen. In einem einfachen Zyklon 112a wird das Rohmehl 101 erhitzt und über eine Zuleitung 115 in die Drehrohrofeneinlaufkammer 116 geführt. Die Drehrohrofenabgase mit verringerter Menge gegenüber herkömmlichen Anlagen fließt über eine Zuleitung 117 in den Zyklon 112a. Vor dort werden die Drehrohrofenabgase in einen Entstauber 118 gegeben, und zu einem Wärmetauscher 119 geführt, wo aus den Drehrohrofenabgasen weitere Wärme zur Erzeugung von Dampf entnommen wird. Die erkalteten Drehrohrofenabgase werden sodann über einen Ventilator 120 zu einer weiteren Abgasbehandlung geführt, die hier nicht dargestellt ist. Da weit weniger Luft durch den Drehrohrofen 113 geführt wird als in herkömmlichen Anlagen mit Führung von großen Mengen Sekundärluft 114 durch den Drehrohrofen 113, entsteht auch weniger Luftstickstoff in Form von nitrosen Gase (NOₓ). Die Konzentration an nitrosen Gasen (NOₓ) in den Drehrohrofenabgasen ist höher als bei herkömmlichen Anlagen, weil die nitrosen Gase (NOₓ) nicht durch große Mengen Sekundärluft 114 verdünnt werden. Als Folge davon sind die nitrosen Gase (NOₓ) leichter chemisch umzusetzen, wie beispielsweise ein Auswaschen und Neutralisieren in einer hier nur beispielhaft genannten Gaswäsche oder durch eine an sich bekannte Umsetzung unter SNCR-Katalyse (SNCR, englisch: Selective Non Catalytic Reduction, deutsch: selektive nichtkatalytische Reduktion).

Das in den Drehrohrofen 113 eintretende, teilentsäuerte Rohmehl 101 wird im Drehrohrofen 113 zu Zementklinker gesintert und im dem Drehrohrofen 113 in Materialflussrichtung folgenden Zementklinkerkühler 105 zur Ausbildung der Zementklinkerphasen abgeschreckt. Die in den Zementklinkerkühler 105 zum Kühlen eingeblasene, atmosphärische Luft wird durch den heißen Zementklinker erwärmt. Ein Teil der erwärmten Luft wird im Ofen verwendet, der restliche Teil wird in einem Entstauber 121 entstaubt. Die heiße Kühlerabluft 104 wird sodann in den Calcinator 102 geleitet.

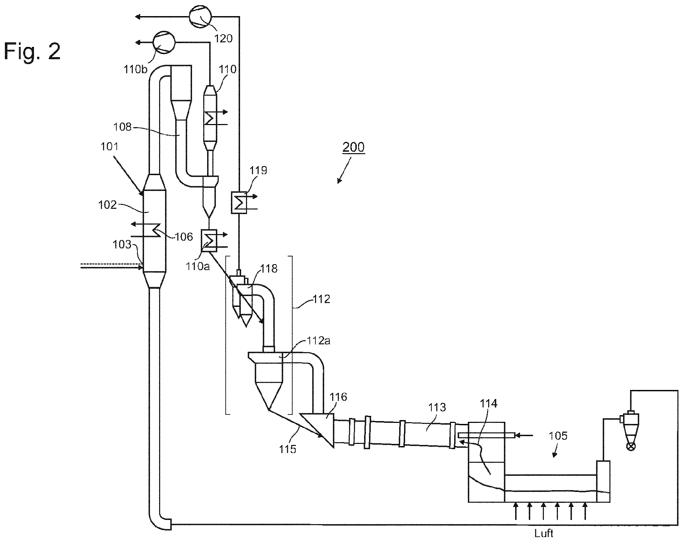

In **Figur 2** ist eine zu Anlage 100 nahezu identische Anlage 200 abgebildet, bei welcher der Calcinator 102 jedoch in der Höhe angeordnet ist. Dadurch entfällt das Becherwerk 111 gegenüber der Anlage 100 und das aus dem Feststoffkühler 110a austretende Rohmehl 101 wird über eine Schwerkraftförderung auf den Wärmetauscher 112 aufgegeben.

**BEZUGSZEICHENLISTE**

| | | | |
|---|---|---|---|
| 100 | Anlage | 111 | Becherwerk |
| 101 | Rohmehl | 112 | Wärmetauscher |
| 102 | Calcinator | 112a | Zyklon |
| 103 | Feuerung | 113 | Drehrohrofen |
| 104 | Kühlerabluft | 114 | Sekundärluft |
| 105 | Zementklinkerkühler | 115 | Zuleitung |
| 106 | Wärmetauscher | 116 | Drehrohrofeneinlaufkammer |
| 107 | Wirbelkammer | 117 | Zuleitung |
| 108 | Ausbrandstrecke | 118 | Entstauber |
| 109 | Entstauber | 119 | Wärmetauscher |
| 110 | Wärmetauscher | 120 | Ventilator |
| 110a | Feststoffkühler | 121 | Entstauber |
| 110b | Ventilator | 200 | Anlage |

## Patentansprüche

1. Anlage (100, 200) zur Herstellung von Zementklinker, aufweisend
- mindestens einen Drehrohrofen (113) zum Sintern des Zementklinkers aus vorcalciniertem Rohmehl (101),
- mindestens ein, dem Drehrohrofen (113) in Gasflussrichtung nachgeschalteten Wärmetauscher (112) zur Rekuperation von Prozesswärme aus dem mindestens einen Drehrohrofen (113),
- mindestens einem Mitstrom-Durchflusscalcinator (102) zum Vorcalcinieren (Entsäuern) von Rohmehl (101),
- mindestens einem, dem Drehrohrofen (113) in Materialflussrichtung nachgeschalteten Klinkerkühler (105) zum Kühlen des gesinterten Zementklinkers, wobei eine Leitung zum Führen von Kühlerabluft (104) zur Rekuperation von Wärme in die Anlage (100, 200) vorgesehen ist,
**dadurch gekennzeichnet, dass**
der Mitstrom-Durchflusscalcinator (102) in Materialflussrichtung vor dem Wärmetauscher (112) angeordnet ist.

2. Anlage nach Anspruch 1,
**dadurch gekennzeichnet, dass**
eine Leitung zum Führen von Kühlerabluft (104) zur Rekuperation von Wärme in die Anlage vom Kühler zum Fuß des Mitstrom-Durchflusscalcinators (102) geführt ist.

3. Anlage nach einem der Ansprüche 1 oder 2,
**dadurch gekennzeichnet, dass**
ein mindestens ein Wärmetauscher (106, 110, 110a, 119) zur Entnahme von Prozesswärme für die Erzeugung von elektrischer Energie vorgesehen ist, die ausgewählt ist aus der Gruppe von
- Wärmetauscher (119) zur Entnahme von Prozesswärme für die Erzeugung von elektrischer Energie am Ausgang des Wärmetauschers (112) zur Rekuperation von Prozesswärme aus dem mindestens einen Drehrohrofen (113),
- Wärmetauscher (106) zur Entnahme von Prozesswärme aus dem Mitstrom-Durchflusscalcinator (102) für die Erzeugung von elektrischer Energie,
- Wärmetauscher als Feststoffkühler (110a) zur Entnahme von Prozesswärme für die Erzeugung von elektrischer Energie mitelbar oder unmittelbar am materialstromseitigen Ausgang des Mitstrom-Durchflusscalcinators (102),
- Wärmetauscher (110) zur Entnahme von Prozesswärme für die Erzeugung von elektrischer Energie am gasstromseitigen Ausgang eines Entstaubers (109), der hinter einer Ausbrandstrecke (108) einer dem Mitstrom-Durchflusscalcinator (102) nachgeschalten Wirbelkammer (107) angeordnet ist.

4. Anlage nach einem der Ansprüche 1 bis 3,
**dadurch gekennzeichnet, dass**
eine Wirbelkammer (107) mit Ausbrandstrecke (108) in Form eines Rohres wie ein Schwanenhalsreaktor mit der Wirbelkammer (107) als Umlenkpunkt des Schwanenhalsreaktors dem Mitstrom-Durchflusscalcinator (102) in Materialflussrichtung und in Gasflussrichtung nachgeschaltet ist.

5. Anlage nach einem der Ansprüche 1 bis 4,
**dadurch gekennzeichnet, dass**
ein mechanisches Hebewerk (111) zwischen einem gasstromseitigen Ausgang eines Entstaubers (109), der hinter einer Ausbrandstrecke (108) einer dem Mitstrom-Durchflusscalcinator (102) nachgeschalten Wirbelkammer (107) angeordnet ist, zum Heben des vorcalcinierten Rohmehls (101) in den Wärmetauscher (112) zur Rekuperation von Prozesswärme aus dem mindestens einen Drehrohrofen (113).

6. Anlage nach einem der Ansprüche 1 bis 5,
**dadurch gekennzeichnet, dass**
dass der gasstromseitige Ausgang eines Entstaubers (109), der hinter einer Ausbrandstrecke (108) einer dem Mitstrom-Durchflusscalcinator (102) nachgeschalten Wirbelkammer (107) angeordnet ist, höher angeordnet ist, als der Eingang des vorcalcinierten Rohmehls (101) in den Wärmetauscher (112) zur Rekuperation von Prozesswärme aus dem mindestens einen Drehrohrofen (113), so dass Mittel zum Heben des vorcalcinierten Rohmehls (101) entfallen.

7. Anlage nach einem der Ansprüche 1 bis 6,
**dadurch gekennzeichnet, dass**
- ein Ventilator (120) dem Wärmetauscher (112) zur Rekuperation von Prozesswärme aus dem mindestens einen Drehrohrofen (113) nachgeschaltet ist, wobei zwischen diesem Wärmetauscher (112) und dem Ventilator (120) ein Wärmetauscher (119) zwischengeschaltet ist, und/oder
- ein Ventilator (110b) einem gasstromseitigen Ausgang eines Entstaubers (109), der hinter einer Ausbrandstrecke (108) einer dem Mitstrom-Durchflusscalcinator (102) nachgeschalten Wirbelkammer angeordnet ist, wobei zwischen diesem Entstauber (109) und dem Ventilator (111) ein Wärmetauscher (110) zwischengeschaltet ist.

## Claims

1. A plant (100, 200) for production of cement clinker, comprising
- at least one rotary kiln (113) for sintering the cement clinker from precalcined raw meal (101),
- at least one heat exchanger (112) connected downstream of the rotary kiln (113) in gas flow direction for recuperation of process heat from the at least one rotary kiln (113),
- at least one entrained flow calciner (102) for precalcination (deacidification) of raw meal (101),
- at least one clinker cooler (105) connected downstream of the rotary kiln (113) in material flow direction for cooling of the sintered cement clinker, wherein a conduit for guiding cooler waste air (104) into the plant (100, 200) for recuperation of heat has been provided,
**characterized in that**
the entrained flow calciner (102) has been arranged upstream of the heat exchanger (112) in material flow direction.

2. The plant as claimed in claim 1,
**characterized in that**
a conduit for guiding of waste cooler air (104) for recuperation of heat into the plant is guided from the cooler to the bottom of the entrained flow calciner (102).

3. The plant as claimed in either of claims 1 and 2,
**characterized in that**
an at least one heat exchanger (106, 110, 110a, 119) has been provided for withdrawal of process heat for the generation of electrical energy, selected from the group of
- heat exchanger (119) for withdrawal of process heat for the generation of electrical energy at the outlet of the heat exchanger (112) for recuperation of process heat from the at least one rotary kiln (113),
- heat exchanger (106) for withdrawal of process heat from the entrained flow calciner (102) for the generation of electrical energy,
- heat exchanger as solids cooler (110a) for withdrawal of process heat for the generation of electrical energy indirectly or directly at the material flow outlet of the entrained flow calciner (102),
- heat exchanger (110) for withdrawal of process heat for the generation of electrical energy at the gas flow outlet of a dedusting apparatus (109) disposed beyond a burnout zone (108) of a swirl chamber (107) connected downstream of the entrained flow calciner (102).

4. The plant as claimed in any of claims 1 to 3,
**characterized in that**
a swirl chamber (107) with a burnout zone (108) in the form of a pipe like a gooseneck reactor with the swirl chamber (107) as deflection point of the gooseneck reactor is connected downstream of the entrained flow calciner (102) in material flow direction and in gas flow direction.

5. The plant as claimed in any of claims 1 to 4,
**characterized in that**
a mechanical lift system (111) between a gas flow outlet of a dedusting apparatus (109) disposed beyond a burnout zone (108) of a swirl chamber (107) connected downstream of the entrained flow calciner (102) for lifting the precalcined raw meal (101) into the heat exchanger (112) for recuperation of process heat from the at least one rotary kiln (113).

6. The plant as claimed in any of claims 1 to 5,
**characterized in that**
the gas stream outlet of a dedusting apparatus (109) disposed beyond a burnout zone (108) of a swirl chamber (107) connected downstream of the entrained flow calciner (102) is disposed at a higher level than the inlet for the precalcined raw meal (101) into the heat exchanger (112) for recuperation of process heat from the at least one rotary kiln (113), such that no means of lifting the precalcined raw meal (101) are required.

7. The plant as claimed in any of claims 1 to 6,
**characterized in that**
- a ventilator (120) has been connected downstream of the heat exchanger (112) for recuperation of process heat from the at least one rotary kiln (113), where a heat exchanger (119) has been connected between said heat exchanger (112) and the ventilator (120), and/or
- a ventilator (110b) to a gas stream outlet of a dedusting apparatus (109) disposed beyond a burnout zone (108) of a swirl chamber connected downstream of the entrained flow calciner (102), where a heat exchanger (110) has been connected between this dedusting apparatus (109) and the ventilator (111).

## Revendications

1. Installation (100, 200) de production de clinker de ciment, ladite installation comprenant
- au moins un four tubulaire rotatif (113) destiné à fritter le clinker de ciment à partir de farine crue précalcinée (101),
- au moins un échangeur de chaleur (112) monté en aval du four tubulaire rotatif (113) dans le sens d'écoulement de gaz et destiné à récupérer de la chaleur de traitement de l'au moins un four tubulaire rotatif (113),
- au moins un calcinateur à flux à co-courant (102) destiné à pré-calciner (désacidifier) la farine crue (101),
- au moins un refroidisseur de clinker (105) monté en aval du four tubulaire rotatif (113) dans le sens d'écoulement de matière et destiné à refroidir le clinker de ciment fritté, une conduite étant prévue pour guider l'air de sortie de refroidisseur (104) jusque dans l'installation (100, 200) afin de récupérer la chaleur,
**caractérisée en ce que**
le calcinateur à flux à co-courant (102) est disposé en amont de l'échangeur de chaleur (112) dans le sens d'écoulement de matière.

2. Installation selon la revendication 1,
**caractérisée en ce que**
une conduite destinée à guider l'air de sortie de refroidisseur (104) jusque dans l'installation afin de récupérer la chaleur est guidée du refroidisseur à la base du calcinateur à flux à co-courant (102).

3. Installation selon l'une des revendications 1 et 2,
**caractérisée en ce que**
au moins un échangeur de chaleur (106, 110, 110a, 119) est prévu pour éliminer la chaleur de traitement afin de générer de l'énergie électrique, lequel échangeur de chaleur est sélectionné dans le groupe comprenant
- les échangeurs de chaleur (119) destinés à retirer la chaleur de traitement afin de générer de l'énergie électrique à la sortie de l'échangeur de chaleur (112) pour récupérer la chaleur de traitement provenant d'au moins un four tubulaire rotatif (113),
- les échangeurs de chaleur (106) destinés à retirer la chaleur de traitement du calcinateur à flux à co-courant (102) afin de générer de l'énergie électrique,
- les échangeurs de chaleur utilisés comme refroidisseurs de matières solides (110a) pour retirer la chaleur de traitement afin de générer de l'énergie électrique directement ou directement à la sortie côté flux de matières du calcinateur à flux à co-courant (102),
- les échangeurs de chaleur (110) destinés à retirer la chaleur de traitement afin de générer de l'énergie électrique à la sortie côté flux de gaz d'un dépoussiéreur (109) qui est disposé derrière une section de brûlage (108) d'une chambre de turbulence (107) montée en aval du calcinateur à flux à co-courant (102) .

4. Installation selon l'une des revendications 1 à 3,
**caractérisée en ce que**
une chambre de turbulence (107) pourvue d'une section de brûlage (108) sous la forme d'un tube, telle qu'un réacteur à col de cygne pourvu de la chambre de turbulence (107) utilisée comme point de déviation du réacteur à col de cygne, est montée en aval du calcinateur à flux à co-courant (102) dans le sens d'écoulement de matière et dans le sens d'écoulement de gaz.

5. Installation selon l'une des revendications 1 à 4,
**caractérisée en ce que**
un mécanisme de levage mécanique (111) est prévu entre une sortie côté flux de gaz d'un dépoussiéreur (109) de gaz, qui est disposé derrière une section de brûlage (108) d'une chambre de turbulence (107) montée en aval du calcinateur à flux à co-courant (102), pour soulever la farine crue pré-calcinée (101) dans l'échangeur de chaleur (112) afin de récupérer la chaleur de traitement de l'au moins un four tubulaire rotatif (113) .

6. Installation selon l'une des revendications 1 à 5,
**caractérisée en ce que**
la sortie côté flux de gaz d'un dépoussiéreur (109), qui est disposée derrière une section de brûlage (108) d'une chambre de turbulence (107) montée en aval du calcinateur à flux à co-courant (102), est disposée plus haut que l'entrée de la farine crue pré-calcinée (101) dans l'échangeur de chaleur (112) afin de récupérer la chaleur du traitement provenant de l'au moins un four tubulaire rotatif (113) de sorte que les moyens destinés à soulever la farine crue pré-calcinée (101) sont supprimés.

7. Installation selon l'une des revendications 1 à 6,
**caractérisée en ce que**
- un ventilateur (120) est monté en aval de l'échangeur de chaleur (112) destiné à récupérer la chaleur de traitement de l'au moins un four tubulaire rotatif (113), un échangeur de chaleur (119) étant interposé entre cet échangeur de chaleur (112) et le ventilateur (120), et/ou
- un ventilateur (110b) est disposé à la sortie côté flux de gaz d'un dépoussiéreur (109) qui est disposé derrière une section de brûlage (108) d'une chambre de turbulence montée en aval du calcinateur à flux à co-courant (102), un échangeur de chaleur (110) étant interposé entre ce dépoussiéreur (109) et le ventilateur (111).
